(19)

Europäisches
Patentamt
European
Patent Office
Office européen
des brevets

(11) **EP 2 369 360 A2**

(12) **EUROPEAN PATENT APPLICATION**

(43) Date of publication:
**28.09.2011 Bulletin 2011/39**

(51) Int Cl.:
*G01S 5/00* <sup>(2006.01)</sup>   *H04W 64/00* <sup>(2009.01)</sup>

(21) Application number: **10195951.8**

(22) Date of filing: **28.03.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(62) Document number(s) of the earlier application(s) in
accordance with Art. 76 EPC:
**06111857.6 / 1 841 256**

(71) Applicant: **Research In Motion Limited
Waterloo, ON N2L 3W8 (CA)**

(72) Inventors:
• **Wormald, Christopher
Waterloo Ontario N2K 0A7 (CA)**

• **Bells, Matthew
Waterloo Ontario N2L 3L3 (CA)**
• **Klassen, Gerhard Dietrich
Waterloo Ontario N2L 3L3 (CA)**

(74) Representative: **Moore, Barry et al
Hanna Moore & Curley
13 Lower Lad Lane
Dublin 2 (IE)**

Remarks:
This application was filed on 20-12-2010 as a
divisional application to the application mentioned
under INID code 62.

(54) **Estimating locations of cells and mobile devices**

(57)    Mobile devices generate location reports (220)
that include locations (222) of the mobile devices, an
identification (216) of a uniquely identifiable radio fre-
quency source (126, 128) identified by the mobile devices
at the locations, and transmit powers of the mobile de-
vices to the radio frequency source at the locations. A
radio frequency source profile (900) for the uniquely iden-
tifiable radio frequency source is constructed from the
location reports. The radio frequency source profile in-
cludes information based on the transmit powers and in-
cludes an approximate location (902) of a transmit area
for the uniquely identifiable radio frequency source. In
response to a query from a mobile device (1100, 138),
the radio frequency source profile is transmitted to the
mobile device to enable the mobile device to use the
approximate location and the information in estimating
its location.

FIG. 8

## Description

Information about the location of a mobile device may be required in order to comply with the Enhanced 911 (E911) directive set by the Federal Communications Commission (FCC). In addition, a location of a mobile device may be used in providing location-based services (LBS) to a user of the mobile device.

One method for a mobile device to find its location is the use of Global Positioning System (GPS). In another method, denoted Assisted GPS, a mobile device may receive a location of a nearby base station and may optionally use it for connecting to satellites of the GPS, shortening the overall time needed for the process. Cellular network operators currently charge for using the service.

EP 1237009 describes a method for positioning a wireless communication device (MS). In the method, position data of one or a plurality of reference points is stored into at least one data base (DB), and it is detected which of said reference points is located in the vicinity of the wireless communication device (MS). In the method, at least position data of said reference point located in the vicinity of the wireless communication device (MS) is transmitted to the wireless communication device (MS), wherein in order to perform the positioning, said reference point located in the vicinity of the wireless communication device (MS) is selected as the default location of the wireless communication device (MS). EP 1237009 discloses that the information transmitted to the data base includes identification of a base station, location of the MS, as determined by a GPS receiver of the MS, and timing information from the GPS receiver.

US 2004/0104841 describes a method for generating entries for a database, which database is destined for supporting a positioning of a mobile terminal. In order to enable the generation of information for this database, the method calculating at least one position of a mobile terminal in a cell of a cellular network. The method further comprises determining geographical information on this cell based on the at least one calculated position of the mobile terminal in this cell. Finally, the method comprises providing the determined geographical information together with an identification of the cell for storage in the database.

US 2003/0125046 describes that in a wireless communication network, base station antenna positions and time offsets are stored in a base station almanac data base along with other information used for obtaining the most reliable mobile station position fixes under a variety of conditions. The system uses the position fixes of mobile stations and terrestrial ranging information to determine base station antenna positions and base station timing offsets. The base station antenna positions are determined during normal mobile station position determinations, in order to maintain and improve the antenna location data, and to correct for change or relocation of the base station antennas. It is possible to recover quickly from a loss of cell sector identity during relocation of a base station antenna, and to ensure accuracy of mobile station position determination based on ranging from the base stations, and rapid acquisition of position data from mobile stations having global satellite receivers.

WO 2004/068776 describes a method of obtaining data useful for one or more network applications. The method is performed responsive to a triggering event, such as a dropped call, a position fix, or even expiration of a timer. A position estimate for a subscriber station is obtained responsive to the event. A record is then formed associating the position estimate for the subscriber station with an identifier of the triggering event and/or data measured or obtained responsive to the event, such as the strength of one or more pilots visible to the subscriber station. The record is either stored locally or transmitted to a remote location. In one implementation, the record is transmitted to a remote location, and stored in a database holding like records relating to other subscriber stations.

EP 1521490 describes determining weighting factors for geographic positions and/or cell center points (M1, M2, M3, M4). The position of the user station (UE) is determined from as the centroid (S) of the weighted geographical position or the weighted cell center points (M1-M4) of the radio stations (Nodes B1-B4) received.

WO 03/010552 describes a method of determining the position of a transmitter located in the vicinity of a mobile communication device which is able to determine its position. The method comprises the steps of (i) moving the mobile communications device to a plurality of reference locations; (ii) determining the position of the mobile communications device and the range from the mobile communications device to the transmitter at each reference location; and (iii) determining the position of the transmitter using the positions and corresponding ranges determined in step (ii).

SUMMARY

The approximate location of a transmit area from a uniquely identifiable radio frequency source of a network is calculated based on locations in the vicinity of which mobile devices were able to detect the uniquely identifiable radio frequency source. For example, the approximate location may be calculated as the median of the locations. The locations may have been collated from location reports submitted by the mobile devices, each location report identifying one or more uniquely identifiable radio frequency sources that are detectible by one of the mobile devices in the vicinity of a particular location. The location reports may be generated and/or transmitted by the mobile devices according to a directive for a geographical area in the network.

A mobile device is able to query a server for the approximate locations of one or more uniquely identifiable radio frequency sources of a network that the mobile device can identify and to estimate its own location from the information received from the server. This estimated location of the mobile device may be used to seed its GPS receiver.

In one embodiment, the network may be a cellular network, the uniquely identifiable radio frequency source may be a base station of the cellular network having directional antennae, and the transmit area may be a directed cell of the cellular network.

In another embodiment, the network may be a cellular network, the uniquely identifiable radio frequency source may be a base station of the cellular network having an omnidirectional antenna, and the transmit area may be the entire cell of the cellular network.

In a further embodiment, the network may be a wireless local area network, the uniquely identifiable radio frequency source may be an access point of the wireless local area network, and the transmit area may be a coverage area of the access point.

In one aspect there is provided a method for assisting a mobile device to estimate its location in a network. The method comprises receiving from mobile devices location reports that include locations of the mobile devices, an identification of a uniquely identifiable radio frequency source in the network identified by the mobile devices at the locations, and transmit powers of the mobile devices to the uniquely identifiable radio frequency source at the locations. The method further comprises constructing from the location reports a radio frequency source profile for the uniquely identifiable radio frequency source, the radio frequency source profile including information based on the transmit powers and including an approximate location of a transmit area for the uniquely identifiable radio frequency source. The method further comprises receiving from the mobile device a query that identifies the uniquely identifiable radio frequency source and, in response to the query, transmitting the radio frequency source profile to the mobile device to enable the mobile device to use the approximate location and the information in estimating its location.

In another aspect there is provided a computer program product for assisting a mobile device to estimate its location in a network, the computer program product comprising a computer readable medium embodying program code means which, when executed by a processor, implements the method described herein.

In another aspect there is provided a location approximation system comprising: a database to store a radio frequency source profile for a uniquely identifiable radio frequency source of a first network, the radio frequency source profile including an approximate location of a transmit area for the uniquely identifiable radio frequency source, wherein the uniquely identifiable radio frequency source is able to communicate with an infrastructure network; a server coupled to the database; and means for communicating with the infrastructure network. The server is arranged to receive from mobile devices in the first network location reports that include locations of the mobile devices, an identification of the uniquely identifiable radio frequency source identified by the mobile devices at the locations, and transmit powers of the mobile devices to the uniquely identifiable radio frequency source at the locations. The server is further arranged to construct the radio frequency source profile from the location reports. The radio frequency source profile includes information related to the transmit powers. In response to receipt by the server of a query from a mobile device identifying the uniquely identifiable radio frequency source, the server is arranged to transmit the radio frequency source profile to the mobile device to enable the mobile device to use the approximate location and the information in estimating its location.

BRIEF DESCRIPTION OF THE DRAWINGS

Embodiments are illustrated by way of example and not limitation in the figures of the accompanying drawings, in which like reference numerals indicate corresponding, analogous or similar elements, and in which:

Figure 1 is an illustration of an exemplary communications system, according to some embodiments of the invention;

Figure 2 is a block diagram of an exemplary mobile device, according to some embodiments of the invention;

Figure 3 is a block diagram of a server in a location approximation system, according to some embodiments of the invention;

Figure 4 shows of exemplary content of a database of a location approximation system, according to embodiments of the invention;

Figure 5 is a flowchart of an exemplary method for a mobile device and for a server of a location approximation system, according to some embodiments of the invention;

Figure 6 is a flowchart of an exemplary method for a mobile device for collecting information, according to some embodiments of the invention;

Figure 7 is a flowchart of an exemplary method in a location approximation system, according to some embodiments of the invention;

Figure 8 shows exemplary directed cell reports stored in a database of a location approximation system, according to embodiments of the invention;

Figure 9 shows exemplary directed cell profiles stored in a database of a location approximation system, according to embodiments of the invention;

Figure 10 is a flowchart of an exemplary method in a location approximation system, according to some embodiments of the invention;

Figure 11 is a block diagram of an exemplary mobile device, according to some embodiments of the invention; and

Figure 12 is a flowchart of an exemplary method for a mobile device, according to some embodiments of the invention.

It will be appreciated that for simplicity and clarity of illustration, elements shown in the figures have not necessarily been drawn to scale. For example, the dimensions of some elements may be exaggerated relative to other elements for clarity.

DETAILED DESCRIPTION

In the following detailed description, numerous specific details are set forth in order to provide a thorough understanding of embodiments of the invention. However it will be understood by those of ordinary skill in the art that the embodiments of the invention may be practiced without these specific details. In other instances, well-known methods, procedures, components and circuits have not been described in detail so as not to obscure the embodiments of the invention.

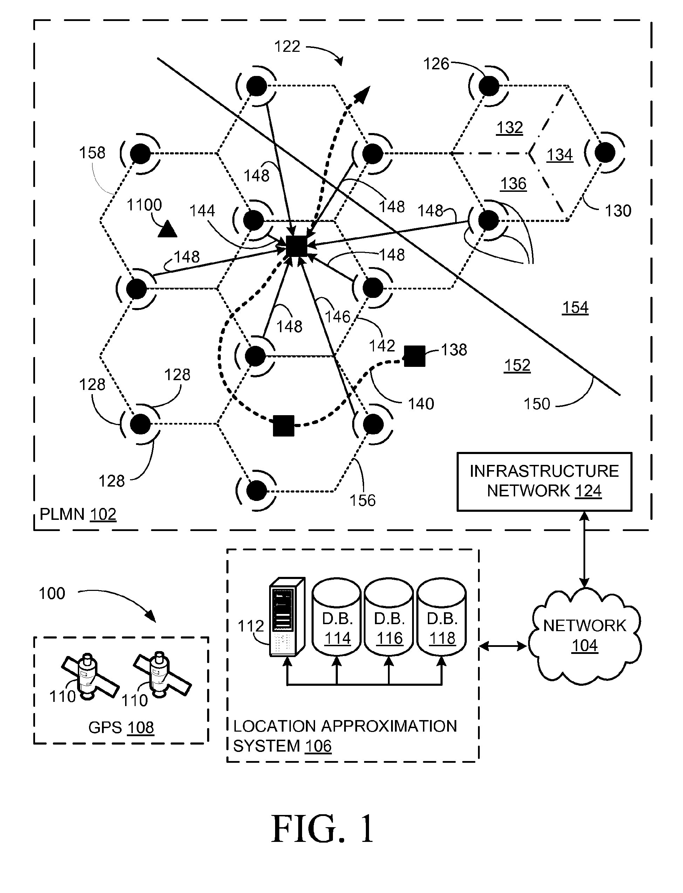

Figure 1 is an illustration of an exemplary communications system 100, according to some embodiments of the invention. Communications system 100 includes a private/public land mobile network (PLMN) 102, a network 104, a location approximation system 106 and a GPS satellite system 108. GPS system 108 includes satellites 110 of which only two are shown.

Network 104 may include any combination of wired, wireless and optical networks, and may include additional communication devices (not shown) such as gateways, routers, switches, and the like. Network 104 may include any combination of private networks, public networks and the Internet.

System 106 includes a server 112 and databases 114, 116 and 118, coupled to server 112. PLMN 102 includes a cellular network 122 and an infrastructure network 124. Cellular network 122 includes base stations 126, of which thirteen are shown, that are in communication with infrastructure 124. System 106 may be able to communicate with infrastructure 124 via network 104.

A non-exhaustive list of examples for communication standards used within cellular network 122 includes Direct Sequence — Code Division Multiple Access (DS-CDMA) cellular radiotelephone communication, Global System for Mobile Communications (GSM) cellular radiotelephone, North American Digital Cellular (NADC) cellular radiotelephone, Time Division Multiple Access (TDMA), Extended-TDMA (E-TDMA) cellular radiotelephone, wideband CDMA (WCDMA), General Packet Radio Service (GPRS), Enhanced Data for GSM, Evolution (EDGE), 3G and 4G communication.

In system 100, base stations 126 have three directional antennae 128, although this is merely an example and in other communication systems the base stations may have any other number of directional antennae. Directional antennae 128 are arranged on base stations 126 to transmit and/or receive signals primarily in sectors of 120°, therefore three directional antennae 128 may cover together 360° around any of base stations 126. Any three directional antennae 128 of neighboring base stations 126 that are pointing to a common point form together a logical unit commonly knows as a cell. The area of a cell is commonly shown as a hexagon, although this is an inaccurate schematic representation of the areas actually covered by the directional antennae forming the cell.

The cell itself is divided into three "directed cells", each located near the closest base station. For example, a cell 130 is divided into directed cells 132, 134 and 136. Transmissions from directional antennae 128 may include unique identifications that identify any particular one of the directed cells.

Users may carry cellular mobile devices through areas covered by cellular network 122. For example, a mobile device 138 is shown to be carried along a trajectory 140 through cellular network 122.

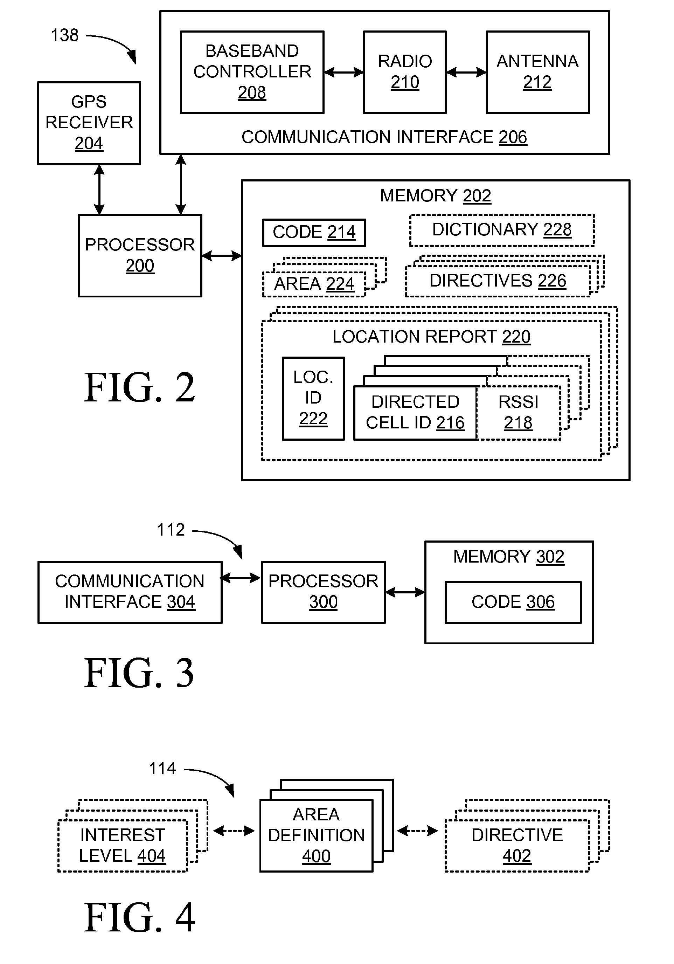

Figure 2 is a block diagram of exemplary mobile device 138, according to some embodiments of the invention. A non-exhaustive list of examples for mobile device 138 includes a wireless cellular phone, a wireless-enabled laptop, a wireless-enabled personal digital assistant (PDA), a wireless-enabled smart phone, a wireless-enabled gaming console, and any other suitable mobile device.

Mobile device 138 includes a processor 200, and a memory 202, a GPS receiver 204 and a wireless communication interface 206, all coupled to processor 200. For clarity, other components of mobile device 138 are not shown in Figure 2.

GPS receiver 204 is able to receive signals originating from satellites 110, and mobile device 138 may be able to calculate its location from information included in the signals.

Communication interface 206 includes at least a baseband controller 208, a radio 210, and an antenna 212 and may be able to communicate with any of directional antennae 128. If the signals from a directional antenna received by mobile device 138 are stronger than a threshold, mobile device 138 may be able to identify the directed cell and to measure received signal strength (RSSI) of the received signals. Possibly, mobile device 138 may also be able to establish communications with the particular directed cell.

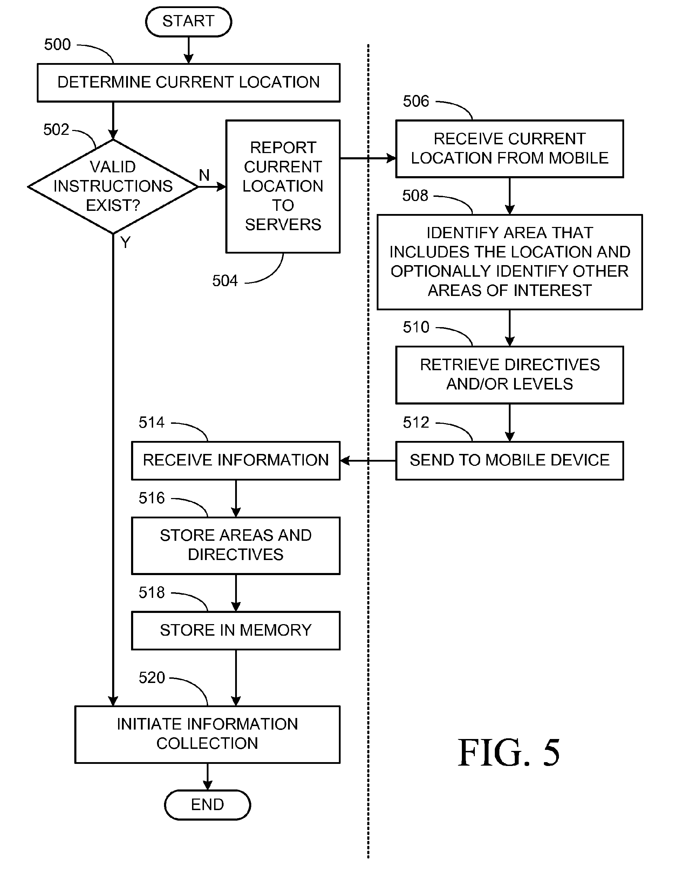

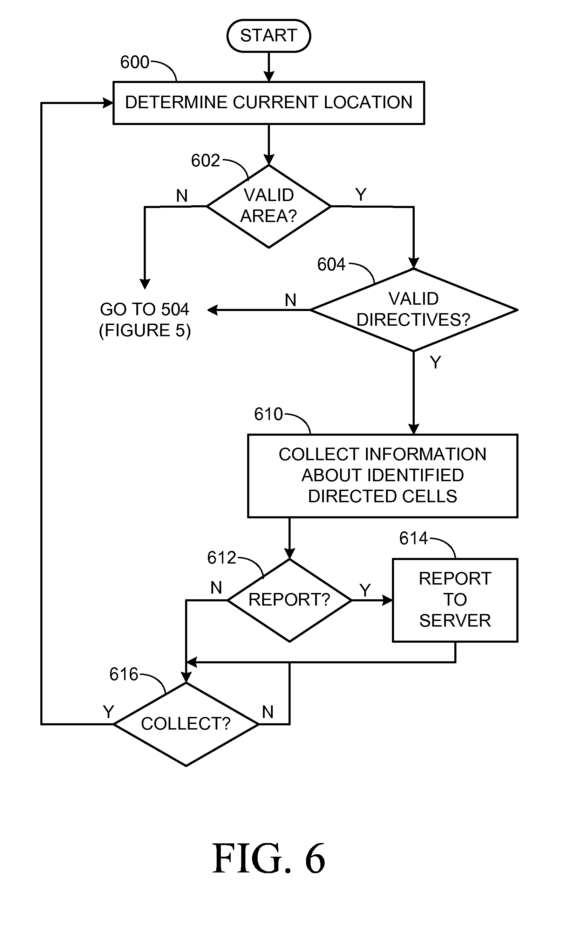

Memory 202 stores code 214 that when executed by processor 202 may cause mobile device 138 to perform its part in the methods described in Figures 5 and 6 below.

Returning to Figure 1, while at the location shown in a cell 142, mobile device 138 may receive signals 144, 146 and 148 that are stronger than the threshold from eight directional antennae 128. Mobile device 138 may be able to identify the eight directed cells of the directional antennae that generate the signals and to measure RSSI of the signals. As shown in Figure 2, the identifications 216 of the directed cells and optionally the RSSI measurements 218 of the signals identifying the directed cells may be stored in mobile device 138 in a location report 220 labeled with an identifier 222 of the location.

Many parameters, such as weather and transmission strength, can affect RSSI measurements. However, as a rule of thumb, RSSI measurement of a signal decreases as the distance between the transmitter and the receiver increases. Therefore, while at the location shown in cell 142, mobile device 138 may measure the strongest RSSI for signal 144, which originates from a directed antenna that is the closest to mobile device 138, and may measure the weakest RSSI for signal 148, which originates from a directed antenna that is the farthest (of the eight) from mobile device 138.

Other parameters are also proportional to the distance between the transmitter and the receiver. For example, in some networks, the base stations ask the mobile devices to adjust their transmit power. In such networks, the transmit power of mobile device 138 may be considered an indication of the distance between mobile device 138 and base station 126. In another example, a time offset gleaned from the signal may be an indication of the distance between mobile device 138 and base station 126. Consequently, location reports 220 may include the transmit power and/or time offset instead of, or in addition to, the RSSI measurements 218.

Figure 3 is a block diagram of an exemplary server 112, according to some embodiments of the invention. Server 112 includes a processor 300, and a memory 302 and a communication interface 304 coupled to processor 300. For clarity, other components of server 112 are not shown in Figure 3. Server 112 is able to communicate with network 104 by way of interface 304. Memory 302 stores a code 306 that when executed by processor 302 may cause server 112 to perform its part in the methods described in Figures 5, 7, 10 and 12.

System 106 may attempt to collect information about cellular networks such as cellular network 122 from mobile devices such as mobile device 138. Figure 4 shows the exemplary content of database 114, according to embodiments of the invention. Database 114 may include one or more definitions 400 of geographical areas of any suitable sizes and shapes. Geographical areas may be defined in any suitable way, for example, by polygons. For example, a straight line 150 is shown in Figure 1 to be the common boundary of an exemplary geographical area 152 and an exemplary geographical area 154. Some parts of cellular network 122 are located in area 152 and other parts of cellular network 122 are located in area 154.

Database 114 may optionally include one or more directives 402 and any of area definitions 400 may be linked to any of directives 402. If, for example, a particular one of area definitions 400 defines area 154 and is linked to a particular directive 402, the particular directive 402 may define, at least in part, how a mobile device that is located within area 154 should collect information about cellular network 122.

Directives 402 may define, for example, sampling time intervals for mobile devices to sample a cellular network and/or changes in the locations of mobile devices that should trigger the mobile devices to sample the cellular network. In another example, directives 402 may define reporting time intervals for mobile devices to transfer collected information to system 106.

Database 114 may optionally include one or more definitions 404 of interest levels and any of area definitions 400 may be linked to any of interest levels 404. Interest levels 404 may store numerical values or any other suitable representations of the levels of interest of system 106 in receiving information originating from geographical areas. Any particular one of area definitions 400 may be linked to a particular directive 402 or a particular interest level 404.

Figure 5 is a flowchart of an exemplary method for a mobile device, for example, mobile device 138, and for server 112, according to some embodiments of the invention. At 500, mobile device 138 determines its current location, for example, by using GPS receiver 204.

At 502, mobile device 138 checks whether memory 202 stores valid instructions for data collection at the vicinity of its location. As shown in Figure 2, memory 202 may store one or more area definitions 224 and one or more directives 226. If a particular area definition 224 defines an area in which mobile device 138 is currently located and a directive 226 linked to that particular definition 224 includes valid collection instructions, the method may continue to 520.

Otherwise, at 504, mobile device 138 reports its current location to system 106 and at 506, server 112 may receive the report. At 508, server 112 may retrieve from database 114 a particular area definition 400 that defines an area including the current location of mobile device 138. For example, if the current location of mobile device 138 is as shown in Figure 1 in a cell 156, server 112 may retrieve an area definition 400 for area 152. In addition, server 112 may optionally retrieve other area definitions 400 that define other areas of interest, for example, areas in the vicinity of area 152, e.g. area 154.

At 510, server 112 may retrieve from database 114 directives 402 and/or interest levels 404 that are linked to the retrieved area definitions 400. At 512, server 112 may transmit the retrieved information to mobile device 138 and at 514, mobile device 138 may receive the information.

At 516, mobile device 138 may store directives 400 and interest levels 404 received at 514 in fields 224 and 226, respectively in memory 202 (shown in Figure 2).

A dictionary 228 (shown in Figure 2) may be stored in memory 202. Dictionary 228 may receive as input any of interest levels 404 and may output corresponding instructions similar to directives 402. If mobile device 138 receives at 514 any of interest levels 404, at 518, device 138 may use dictionary 228 to identify corresponding directives and may store those directives in fields 226. At 520, mobile device 138 initiates collection of information and the method terminates.

Figure 6 is a flowchart of an exemplary method for a mobile device, for example mobile device 138, for collecting information, according to some embodiments of the invention. At 600, mobile device 138 determines its current location. If memory 202 does not store a definition 224 of an area containing the location determined at 600 (checked at 602), or if memory 202 does not store valid directives 226 for that area (checked at 604), the method may proceed to step 504 of Figure 5. For example, a directive 226 may not be valid if it has an expired time tag.

Otherwise, at 610 and according to area definition 224 and directives 226 recognized at 602 and 604, respectively, while in the vicinity of the determined location, mobile device 138 collects information from signals it receives from directional antennae. Mobile device 138 may store the information collected at 600 and 610 as one location report 220 in memory 202.

At 612, mobile device 138 checks whether, according to the directives 226 for the area in which the current mobile device 138 is located, it is time for device 138 to report location reports 220 to system 106. If so, then at 614 mobile device 138 may transmit location reports 220 that are stored in memory 202 to system 106. Device 138 may wait at 616 until, according to the directives for the area in which the current mobile device 138 is located, it is time for mobile device 138 to collect more information and the method may continue to 600.

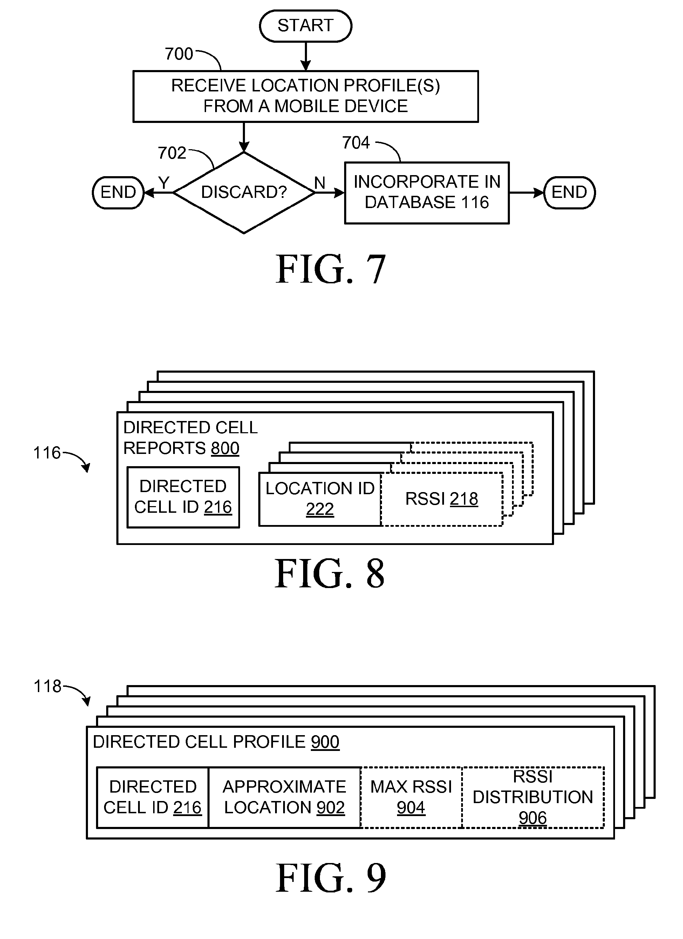

Figure 7 is a flowchart of an exemplary method in system 106, according to some embodiments of the invention.

Many mobile devices, such as mobile device 138, may collect location reports 220, and may send several location reports 220 to system 106. At 700, server 112 may receive a particular location report 220 from mobile device 138. Server 112 may decide at 702 not to incorporate the particular location report 220 into database 116 and the method may terminate. Otherwise, at 704, server 112 may incorporate information included in the particular location report 220 into one or more of directed cell reports, and may optionally discard from database 116 information previously incorporated from other location reports.

Information in selected location reports 220 received by system 106 from various mobile devices is collated into directed cell reports stored in database 116. Figure 8 shows exemplary directed cell reports stored in database 116, according to embodiments of the invention. A directed cell report 800 identifies the directed cell for which it contains information with identification 216. Directed cell report 800 also includes those location identifiers 222 of location reports 220 that included directed cell ID 216. Optionally, directed cell report 800 also includes RSSI measurements 218 for the directed cell identified by ID 216 obtained from location reports 220 that included directed cell ID 216. In other embodiments, directed cell report 800 includes transmit powers and/or time offsets instead of or in addition to the RSSI measurements.

A location report can therefore be understood as identifying the directed cells whose signals were received by mobile devices when in the location identified by the location ID of the location report. The location report may also include RSSI measurements of the signals, time offsets gleaned from the signals and/or transmit powers of the mobile devices when in the location identified by the location ID of the location report.

A directed cell report can be understood as identifying the locations at which mobile devices were able to identify received signals as originating in the directed cell. The directed cell report may also include RSSI measurements of those received signals, time offsets gleaned from the signals, and/or transmit powers of the mobile devices.

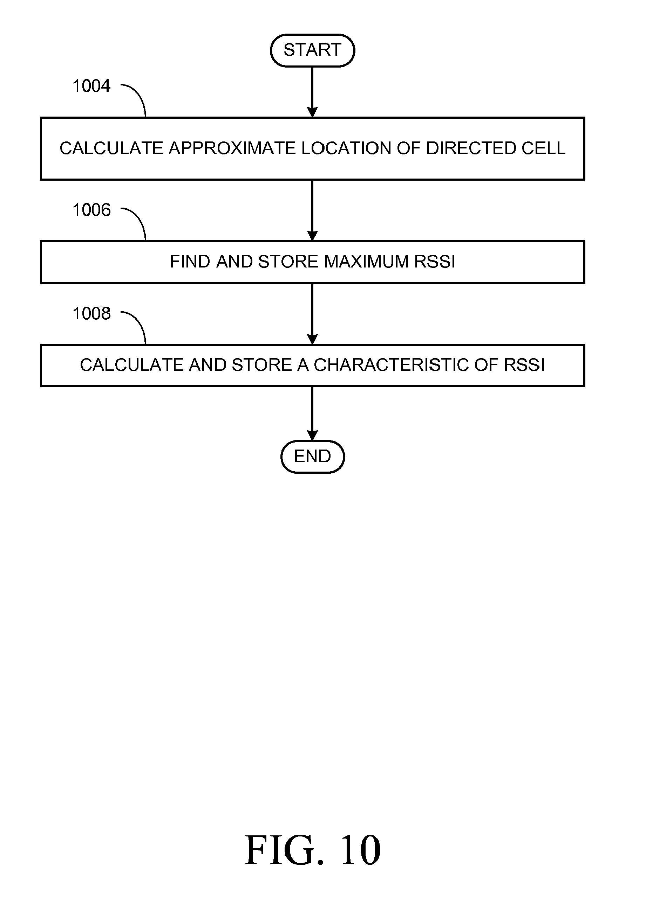

Figure 9 shows exemplary directed cell profiles 900 in database 118, according to embodiments of the invention. Figure 10 is a flowchart of an exemplary method in system 106, according to some embodiments of the invention.

Any of directed cell reports 800 may include a vast amount of locations 222 and optionally RSSI measurements 218, for example few hundreds to tenth of thousands. Once enough information has been stored in a particular directed cell report 800, or when the particular directed cell report 800 has been updated, or for any other reason, server 112 may create or update a directed cell profile 900 in database 118 that has the same directed cell ID 216.

At 1004, a server 112 calculates the approximate location of the directed cell identified by directed cell ID 216 from at least locations 222 in the corresponding directed cell report 800. For example, server 112 may calculate the median or average of locations 222, separately for each axis (e.g. longitude and latitude). Server 112 may store the approximate location in a field 902 in the particular directed cell profile 900. It should be noted that the approximate location of a particular directed cell calculated by server 112 from locations 222 in the corresponding directed cell report 800 is likely different than the location of base station 126 a directional antenna of which transmits signals for the particular directed cell.

At 1006, server 112 may optionally store the maximal one of RSSI measurements 218 in a field 904 in the particular directed cell profile 900. At 1008, server 112 may optionally calculate a statistical characteristic, for example, standard deviation, of RSSI measurements 218 and may store the result in a field 906 in the particular directed cell profile 900. In other embodiments, server 112 may optionally store the maximal transmit power and/or time offset and/or statistical characteristics thereof in the particular directed cell profile.

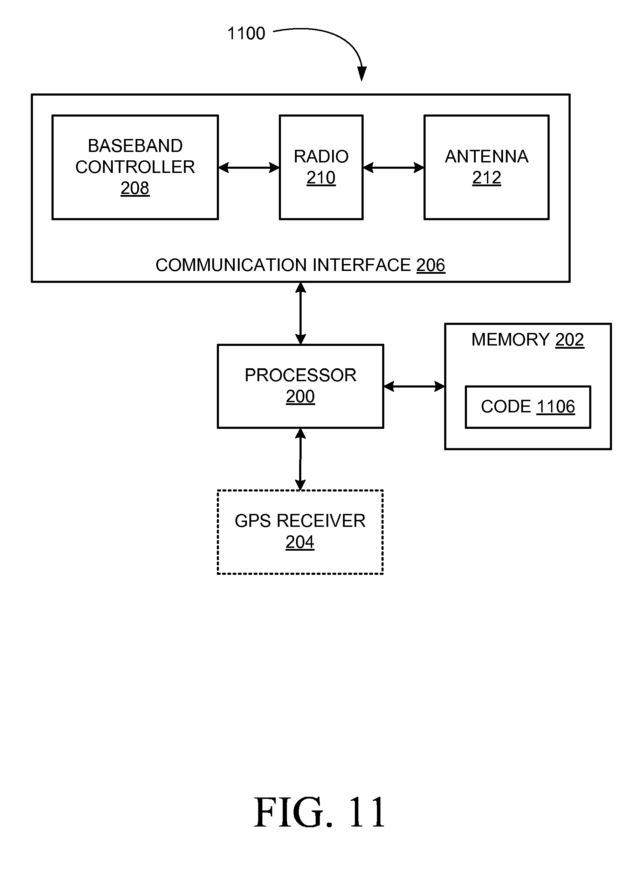

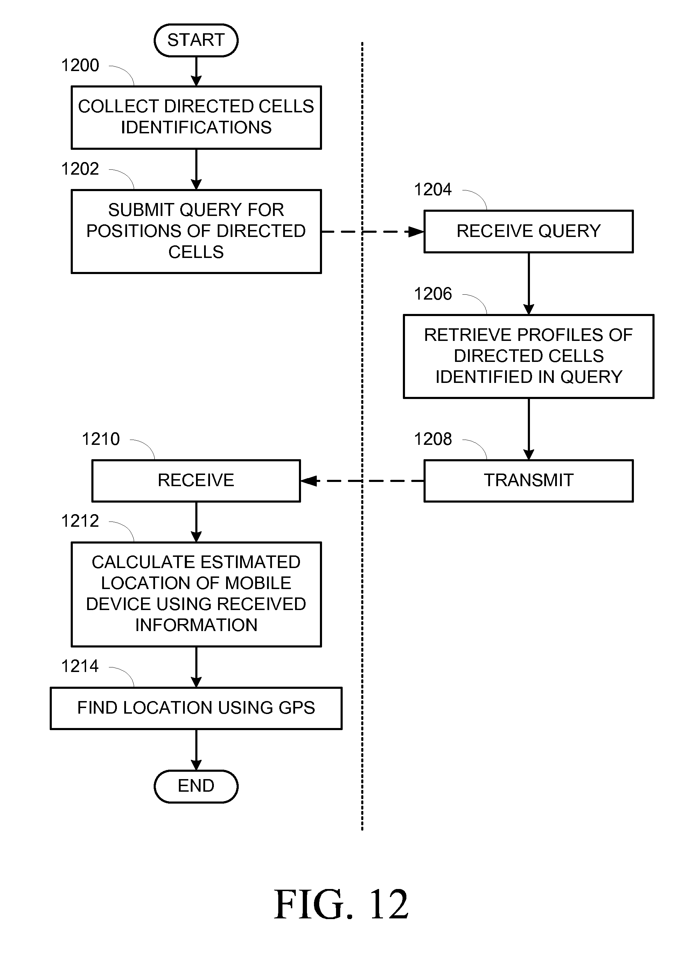

Figure 11 is a block diagram of an exemplary mobile device 1100, according to some embodiments of the invention. Figure 11 is similar to Figure 2 except that code 1106 stored in memory 202 implements its part of the method described in Figure 12. In addition, mobile device 1100 is not necessarily equipped with GPS receiver 204.

Figure 12 is a flowchart of an exemplary method for mobile device 1100 and server 112, according to some embodiments of the invention. As shown in Figure 1, device 1100 is located in a cell 158 in area 152. At 1200, device 1100 collects identifications of one or more directed cells in its vicinity. These directed cells are identified from signals received by device 1100 from directional antennae 128 in cellular network 122. Device 1100 may also measure the RSSI of those signals. In other embodiments, device 1100 may glean time offsets of those signals and/or note its transmit power at the time the signals were received. At 1202, device 1100 may transmit to system 106 a query for positions of the identified directed cells, and server 112 may receive the query at 1204.

At 1206, server 112 may retrieve from database 118 one or more directed cell profiles 900 corresponding to the directed cells identified in the query. At 1208, server 112 may transmit the retrieved directed cell profiles 900 and at 1210, device 1100 receives the transmission. The information received at 1210 may be cached by device 1100 for future reference, thus circumventing the need to request the locations of directed cells more than once.

At 1212, device 1100 may optionally estimate its location from the information received at 1210. For example, if the query is for the position of a single directed cell, then device 1100 may estimate its location as the approximate location of the directed cell received from server 112. If the query is for the positions of two or more directed cells, then device 1100 may estimate its location for each axis as the weighted average of the coordinates of each directed cell, where the weight function is a linear mapping of signal strength from each directed cell. For example, if the query is for the positions of directed cells A, B and C, and device 1100 has measured RSSI values $RSSI_A$, $RSSI_B$ and $RSSI_C$ respectively for signals identifying those directed cells, and the positions received from server 112 are in latitude and longitude coordinates, then the calculation is as follows:

$$\text{device lat} = \frac{w(RSSI_A) \cdot lat_A + w(RSSI_B) \cdot lat_B + w(RSSI_C) \cdot lat_c}{w(RSSI_A) + w(RSSI_B) + w(RSSI_C)}$$

$$\text{device long} = \frac{w(RSSI_A) \cdot long_A + w(RSSI_B) \cdot long_B + w(RSSI_C) \cdot long_c}{w(RSSI_A) + w(RSSI_B) + w(RSSI_C)}$$

where w is the weight function. In other embodiments, the weight function is a linear mapping of transmit power and/or time offset.

At 1214, if equipped with GPS receiver 204, device 1100 may optionally use its approximated location to communicate with satellites 110. This may shorten the time required for GPS receiver 204 to determine a more precise location of device 1100.

Many modifications will occur to persons of ordinary skill in the art. For example, databases 114, 116 and 118 may be a single database or distributed databases. In another example, separate servers may substitute for server 112.

It will be appreciated by persons of ordinary skill in the art how to modify the foregoing to apply to other radio frequency (RF) communication systems. The term "directed cell" may therefore be understood to include any transmit area from any uniquely identifiable RF source. For example, if omnidirectional antennae are substituted for the directional antennae described hereinabove, then the directed cell is understood to be the entire cell. In another example, if the communication system is an IEEE 802.11 WLAN system and access points are substituted for the base stations described hereinabove, then the directed cell is understood to be the coverage area of the access point.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1. A method for assisting a mobile device (1100, 138) to estimate its location in a network (122), the method comprising:

receiving from mobile devices location reports (220) that include locations (222) of the mobile devices, an identification (216) of a uniquely identifiable radio frequency source (126, 128) in the network identified by the mobile devices at the locations, and transmit powers of the mobile devices to the uniquely identifiable radio frequency source at the locations;

constructing from the location reports a radio frequency source profile (900) for the uniquely identifiable radio frequency source, the radio frequency source profile including information based on the transmit powers and including an approximate location (902) of a transmit area for the uniquely identifiable radio frequency source;

receiving from the mobile device a query that identifies the uniquely identifiable radio frequency source; and

in response to the query, transmitting the radio frequency source profile to the mobile device to enable the mobile device to use the approximate location and the information in estimating its location.

2. The method of claim 1, wherein the information is a maximal transmit power of the transmit powers and/or a statistical characteristic of the transmit powers.

3. The method of claim 1 or claim 2, further comprising:

determining the approximate location as a set of coordinates on perpendicular axes, wherein the set of coordinates represents statistical characteristics of the locations.

4. The method of any one of claims 1 to 3, wherein the network is a cellular network, the uniquely identifiable radio frequency source is a base station of the cellular network having directional antennae, and the transmit area is a directed cell of the cellular network.

5. The method of any one of claims 1 to 3, wherein the network is a cellular network, the uniquely identifiable radio frequency source is a base station of the cellular network having an omnidirectional antenna, and the transmit area is an entire cell of the cellular network.

6. The method of any one of claims 1 to 3, wherein the network is a wireless local area network, the uniquely identifiable radio frequency source is an access point of the wireless local area network, and the transmit area is a coverage area of the access point.

7. A computer program product for assisting a mobile device (1100, 138) to estimate its location in a network (122), the computer program product comprising a computer readable medium embodying program code means which, when executed by a processor, implements the method of any one of claims 1 to 6.

8. A location approximation system (106) comprising:

a database (118) to store a radio frequency source profile (900) for a uniquely identifiable radio frequency source (126, 128) of a first network (122), the radio frequency source profile including an approximate location (902) of a transmit area for the uniquely identifiable radio frequency source, wherein the uniquely identifiable radio frequency source is able to communicate with an infrastructure network (124);

a server (112) coupled to the database; and

means for communicating with the infrastructure network (124),

wherein the server is arranged to receive from mobile devices location reports (220) that include locations (222) of the mobile devices, an identification (216) of the uniquely identifiable radio frequency source identified by the mobile devices at the locations, and transmit powers of the mobile devices to the uniquely identifiable radio frequency source at the locations,

wherein the server is further arranged to construct the radio frequency source profile from the location reports, wherein the radio frequency source profile includes information related to the transmit powers, and

wherein, in response to receipt by the server of a query from a mobile device (1100, 138) identifying the uniquely identifiable radio frequency source, the server is arranged to transmit the radio frequency source profile to the mobile device to enable the mobile device to use the approximate location and the information in estimating its location.

9. The location approximation system of claim 8, wherein the information is a maximal transmit power of the transmit powers and/or a statistical characteristic of the transmit powers.

10. The location approximation system of claim 8 or claim 9, wherein the server is further adapted to determine the approximate location as a set of coordinates on perpendicular axes, wherein the set of coordinates represents statistical characteristics of the locations

11. The location approximation system of any one of claims 8 to 10, wherein the network is a cellular network, the uniquely identifiable radio frequency source is a base station of the cellular network having directional antennae, and the transmit area is a directed cell of the cellular network.

12. The location approximation system of any one of claims 8 to 10, wherein the network is a cellular network, the uniquely identifiable radio frequency source is a base station of the cellular network having an omnidirectional antenna, and the transmit area is an entire cell of the cellular network.

13. The location approximation system of any one of claims 8 to 10, wherein the network is a wireless local area network, the uniquely identifiable radio frequency source is an access point of the wireless local area network, and the transmit area is a coverage area of the access point.

FIG. 1

FIG. 2

FIG. 3

FIG. 4

START

500 — DETERMINE CURRENT LOCATION

502 — VALID INSTRUCTIONS EXIST?

N

REPORT CURRENT LOCATION TO SERVERS

504 —

506 — RECEIVE CURRENT LOCATION FROM MOBILE

508 — IDENTIFY AREA THAT INCLUDES THE LOCATION AND OPTIONALLY IDENTIFY OTHER AREAS OF INTEREST

510 — RETRIEVE DIRECTIVES AND/OR LEVELS

Y

514 — RECEIVE INFORMATION

512 — SEND TO MOBILE DEVICE

516 — STORE AREAS AND DIRECTIVES

518 — STORE IN MEMORY

520 — INITIATE INFORMATION COLLECTION

END

FIG. 5

12

START

600 —

DETERMINE CURRENT LOCATION

602 —

VALID AREA?

N

Y

604 —

VALID DIRECTIVES?

N

GO TO 504 (FIGURE 5)

Y

610 —

COLLECT INFORMATION ABOUT IDENTIFIED DIRECTED CELLS

612 —

REPORT?

N

Y

614 —

REPORT TO SERVER

616 —

COLLECT?

Y

N

FIG. 6

START

700

RECEIVE LOCATION PROFILE(S)
FROM A MOBILE DEVICE

702

END ← Y — DISCARD? — N →

704

INCORPORATE IN
DATABASE 116

→ END

# FIG. 7

116 →

DIRECTED CELL
REPORTS 800

| DIRECTED CELL ID 216 | LOCATION ID 222 | RSSI 218 |

# FIG. 8

118 →

DIRECTED CELL PROFILE 900

| DIRECTED CELL ID 216 | APPROXIMATE LOCATION 902 | MAX RSSI 904 | RSSI DISTRIBUTION 906 |

# FIG. 9

START

1004

CALCULATE APPROXIMATE LOCATION OF DIRECTED CELL

1006

FIND AND STORE MAXIMUM RSSI

1008

CALCULATE AND STORE A CHARACTERISTIC OF RSSI

END

# FIG. 10

1100

BASEBAND CONTROLLER 208 ↔ RADIO 210 ↔ ANTENNA 212

COMMUNICATION INTERFACE 206

PROCESSOR 200

MEMORY 202

CODE 1106

GPS RECEIVER 204

FIG. 11

START

1200

COLLECT DIRECTED CELLS
IDENTIFICATIONS

1202

SUBMIT QUERY FOR
POSITIONS OF DIRECTED
CELLS

1204

RECEIVE QUERY

1206

RETRIEVE PROFILES OF
DIRECTED CELLS
IDENTIFIED IN QUERY

1210

RECEIVE

1208

TRANSMIT

1212

CALCULATE ESTIMATED
LOCATION OF MOBILE
DEVICE USING RECEIVED
INFORMATION

1214

FIND LOCATION USING GPS

END

FIG. 12

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1237009 A
- US 20040104841 A
- US 20030125046 A
- WO 2004068776 A
- EP 1521490 A
- WO 03010552 A